# EUROPEAN PATENT APPLICATION

(11) **EP 4 474 252 A1**
(43) Date of publication of application: **11.12.2024**
(21) Application number: 23177976.0
(22) Date of filing: 07.06.2023
(51) Int. Cl.: B62D 15/02, B60W 30/06, G08G 1/16

(54) **METHOD FOR OPERATING A PARKING ASSISTANCE SYSTEM OF A VEHICLE, DATA PROCESSING APPARATUS, COMPUTER PROGRAM, COMPUTER-READABLE STORAGE MEDIUM, PARKING ASSISTANCE SYSTEM FOR A VEHICLE, AND USE**

(71) Applicant: Volvo Car Corporation, 405 31 Göteborg (SE)
(72) Inventor: HEYRMAN, Sven, 40531 Göteborg (SE)
(74) Representative: Maiwald GmbH

(57) **Abstract**

The disclosure relates to a method for operating a parking assistance system (12) of a vehicle (10). The method comprises receiving parking space data (PD) being indicative of a first marking line (L1) and a second marking line (L2). The first marking line (L1) and the second marking line (L2) limit a parking space (P) in at least one direction. Moreover, the method comprises receiving user setting data (SD) being indicative of a distribution of a difference between a dimension of the parking space (P) defined by the first marking line (L1) and the second marking line (L2) and a dimension of the vehicle (10). Additionally, the method comprises determining a parking trajectory (T) based on the received user setting data (SD). Furthermore, the disclosure is directed to a data processing apparatus (22), a computer program, a computer-readable storage medium, and a parking assistance system (12) for a vehicle (10). Additionally, the disclosure relates to a use of user setting data (SD) for operating a parking assistance system (12) of a vehicle (10).

## Description

The present disclosure relates to a method for operating a parking assistance system of a vehicle.

Additionally, the present disclosure relates to a data processing apparatus, a computer program and a computer-readable storage medium.

Moreover, the present disclosure is directed to a parking assistance system for a vehicle.

Furthermore, the present disclosure relates to a use of user setting data.

Parking assistance systems for vehicles are known. In the present disclosure, parking assistance systems are understood as systems being configured for automatically transferring a vehicle on or in a parking space. Such systems are a comfort feature of a vehicle since a driver who is using such a system does not need to accelerate, decelerate and/or steer the vehicle in order to transfer it on or in a parking space.

It is an objective of the present disclosure to further improve parking assistance systems for vehicles. Especially, the comfort provided by such systems shall be enhanced.

The problem is at least partially solved or alleviated by the subject matter of the independent claims of the present disclosure, wherein further examples are incorporated in the dependent claims.

According to a first aspect, there is provided a method for operating a parking assistance system of a vehicle. The method comprises
- receiving parking space data being indicative of a first marking line and a second marking line, the first marking line and the second marking line limiting a parking space in at least one direction,
- receiving user setting data being indicative of a distribution of a difference between a dimension of the parking space defined by the first marking line and the second marking line and a dimension of the vehicle,
- determining a parking trajectory based on the received user setting data.

Thus, in the present disclosure, the parking trajectory along which the vehicle moves in order to be positioned on or in the parking space is determined as a function of a user setting. In other words, the user is in a position to modify the parking trajectory by the user setting. Based on the parking trajectory, the vehicle can be caused to move on or in the parking space in an autonomous manner. Consequently, the vehicle may be positioned on or in the parking space in accordance with the user's wishes and preferences. This enhances the user comfort of the vehicle. This is for example the case, if the user intends to use a certain door or a certain flap of the vehicle. In such a case, the difference between the dimension of the parking space and the vehicle may be arranged such that a comparatively large portion of the difference is located adjacent to the door or flap that the user of the vehicle wishes to use. Consequently, a comparatively large space may be provided adjacent to this door or flap. The door may relate to a door on the driver side or on the co-driver side. The flap may relate to a trunk or a frunk. In the present context, the difference between the dimension of the parking space and the dimension of the vehicle indicates by how much the parking space is larger than the vehicle. It is noted that the parking space needs to have at least the same dimension as the vehicle in order to be able to position the vehicle on the parking space. The present method may be executed, if the dimension of the parking space is larger than the dimension of the vehicle. It is understood that in this context, the difference, the dimension of the parking space and the dimension of the vehicle need to relate to the same direction. In such a case, the vehicle may be positioned closer to the first marking line and, thus, further away from the second marking line. Alternatively, the vehicle may be positioned closer to the second marking line and, thus, further away from the first marking line. This circumstance is described by the distribution of the difference between the dimension of the parking space and the dimension of the vehicle. In other words, one portion of the difference is arranged between the first marking line and the vehicle and the second portion of the difference is arranged between the second marking line and the vehicle. The first portion and the second portion add up to the entire difference between the dimension of the parking space and the dimension of the vehicle. The distribution may alternatively be referred to as a split ratio indicating a ratio by which the difference is arranged between the first marking line and the vehicle and between the second marking line and the vehicle respectively. It is emphasized that the user setting may be different for each parking maneuver. Altogether, the user comfort of the vehicle is enhanced.

It is noted that the present method uses the first marking line and the second marking line as indicators of the parking space. Optionally, also a location of one or more vehicles being parked adjacent to the parking space may be considered.

In the present context, the parking trajectory may be a middle trajectory, i.e. a curve which is followed by a center of the vehicle while the vehicle is travelling along the parking trajectory.

According to an example, the user setting data is indicative of a first portion of the difference. The first portion is associated with a distance between the first marking line and the vehicle. Additionally or alternatively, the user setting is indicative of a second portion of the difference. The second portion is associated with a distance between the second marking line and the vehicle. The first portion and the second portion may add up to one. The first portion and/or the second portion may be expressed as a percentage. In this case, the first portion and the second portion add up to 100%. This is a simple and efficient way to allow a user of the vehicle to have the difference between the dimension of the parking space and the dimension of the vehicle distributed as desired. Consequently, the user may comfortably access the desired door or flap of the vehicle.

In an example, the first portion or the second portion is 50 % or 55% to 95%. In a case in which the first portion is 50%, also the second portion is 50% and vice versa. In other words, the distance between the first marking line and the vehicle and the distance between the second marking line and the vehicle are equal. Thus, the vehicle is accessible with comparable comfort from two opposite sides. If the first portion is 55 to 95%, more space is provided between the first marking line and the vehicle as compared to the space between the second marking line and the vehicle. The user of the vehicle may choose this option if he or she intends to use a door or flap being located on the same side of the vehicle as the first marking line. If the second portion is 55 to 95%, more space is provided between the second marking line and the vehicle as compared to the space between the first marking line and the vehicle. The user of the vehicle may choose this option if he or she intends to use a door or flap being located on the same side of the vehicle as the second marking line. Thus, depending on the situation, the user may require space where needed by providing an appropriate user setting.

In another example, the method further comprises checking whether the received user setting data fulfils a predefined requirement and determining the parking trajectory based on the received user setting data only if the received user setting data fulfils the predefined requirement. Thus, a user setting that would lead to a disadvantageous or even dangerous parking trajectory or situation is not used. In a special case, the predefined requirement relates to a safety margin that needs to be kept between the first marking line and the vehicle and/or between the second marking line and the vehicle. The safety margin may for example relate to 5% or 10%. This means that the distribution of the difference which may be chosen by the user varies from 5% to 95% or from 10% to 90% only. Thus, sufficient space for a user of the neighboring vehicle is provided on each side of the vehicle.

In an example, the at least one direction is a width direction of the parking space. In this context, the width direction of the parking space is the direction of the parking space's shorter dimension, if the parking space has a rectangular form. The width direction of the parking space is associated with the width direction of a vehicle which may be parked on the parking space. The width direction of the vehicle is arranged perpendicularly to a standard forward driving direction of the vehicle. If the at least one direction is a width direction, the present method allows the user of the vehicle to distribute the difference between the width dimension of the parking space and the width dimension of the vehicle. Thus, considering the width dimension of the parking space the vehicle may be parked such that a portion of the difference as defined by the user setting is provided on the driver side and/or on the co-driver side. Thus, the doors on the driver side and/or on the call-driver side may be comfortably accessed. This is useful if only a single occupant is using the vehicle or if all occupants of the vehicle are sitting on the same side of the vehicle. Moreover, this is advantageous if one of the occupants needs a comparatively large space in order to exit the vehicle. This may be the case for elderly people or for person having a disability and/or needing a walking aid.

In another example, the at least one direction is a length direction of the parking space. In this context, the length direction of the parking space is the direction of the parking space's longer dimension, if the parking space has a rectangular form. The length direction of the parking space is associated with the length direction of a vehicle which may be parked on the parking space. The length direction of the vehicle is arranged in parallel to a standard forward driving direction of the vehicle. If the at least one direction is a length direction, the present method allows the user of the vehicle to distribute the difference between the length dimension of the parking space and the length dimension of the vehicle. Thus, considering the length dimension of the parking space, the vehicle may be parked such that a portion of the difference as defined by the user setting is provided at the front of the vehicle and/or at the rear of the vehicle. Thus, a trunk and/or a frunk may be comfortably accessed.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus comprising means for carrying out the method of the present disclosure. Thus, using such a data processing apparatus, a parking trajectory may be determined such that the vehicle may be positioned on or in the parking space in accordance with the user's wishes and preferences. This enhances the user comfort of the vehicle. This is for example the case, if the user intends to use a certain door or a certain flap of the vehicle. As before, it is emphasized that the user setting may be different for each parking maneuver. Altogether, the user comfort of the vehicle is enhanced.

According to a third aspect, there is provided a computer program comprising instructions which, when the computer program is executed by a computer, cause the computer to carry out the method of the present disclosure. Thus, using such a computer program, a parking trajectory may be determined such that the vehicle may be positioned on or in the parking space in accordance with the user's wishes and preferences. This enhances the user comfort of the vehicle. This is for example the case, if the user intends to use a certain door or a certain flap of the vehicle. As before, it is emphasized that the user setting may be different for each parking maneuver. Altogether, the user comfort of the vehicle is enhanced.

According to a fourth aspect, there is provided a computer-readable storage medium comprising instructions which, when executed by a computer, cause the computer to carry out the method of the present disclosure. Thus, using such a computer-readable storage medium, a parking trajectory may be determined such that the vehicle may be positioned on or in the parking space in accordance with the user's wishes and preferences. This enhances the user comfort of the vehicle. This is for example the case, if the user intends to use a certain door or a certain flap of the vehicle. As before, it is emphasized that the user setting may be different for each parking maneuver. Altogether, the user comfort of the vehicle is enhanced.

According to a fifth aspect, there is provided a parking assistance system for a vehicle. The parking assistance system comprises
- a data processing apparatus according to the present disclosure,
- a detector unit being configured to generate parking space data being indicative of a first marking line and a second marking line, the first marking line and the second marking line limiting a parking space in at least one direction, wherein the detector unit is communicatively connected to the data processing apparatus, and
- a user interface being configured to generate user setting data based on a user input, wherein the user interface is communicatively connected to the data processing apparatus

Such a parking assistance system allows to determine a parking trajectory based on a user input. Thus, the parking trajectory may be determined such that the vehicle may be positioned on or in the parking space in accordance with the user's wishes and preferences. This enhances the user comfort of the vehicle. This is for example the case, if the user intends to use a certain door or a certain flap of the vehicle. As before, it is emphasized that the user setting may be different for each parking maneuver. Altogether, the user comfort of the vehicle is enhanced.

In an example, the detector unit comprises an imaging unit. The imaging unit for example comprises a camera system. Such a detector unit is well suitable for generating parking space data being indicative of a first marking line and the second marking line. Thus, parking space data may be generated in a quick, simple and reliable manner.

According to a sixth aspect, there is provided a use of user setting data being indicative of a distribution of a difference between a dimension of the parking space defined by a first marking line and a second marking line and a dimension of a vehicle for operating a parking assistance system of the vehicle. In contrast to known parking assistance systems which are not configured to consider user setting data, the use according to the present disclosure allows a parking assistance system to determine a parking trajectory based on a user input. Thus, the parking trajectory may be determined such that the vehicle may be positioned on or in the parking space in accordance with the user's wishes and preferences. This enhances the user comfort of the vehicle. This is for example the case, if the user intends to use a certain door or a certain flap of the vehicle. As before, it is emphasized that the user setting may be different for each parking maneuver. Altogether, the user comfort of the vehicle is enhanced.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.
- Figure 1: shows a vehicle comprising a parking assistance system according to the present disclosure with a data processing apparatus according to the present disclosure, a computer-readable storage medium according to the present disclosure and a computer program according to the present disclosure, wherein the parking assistance system may be operated using a method according to the present disclosure for operating a parking assistance system,
- Figure 2: shows a first parking situation comprising the vehicle of Figure 1, and
- Figure 3: shows a second parking situation comprising the vehicle of Figure 1.

The Figures are merely schematic representations and serve only to illustrate examples of the disclosure. Identical or equivalent elements are in principle provided with the same reference signs.

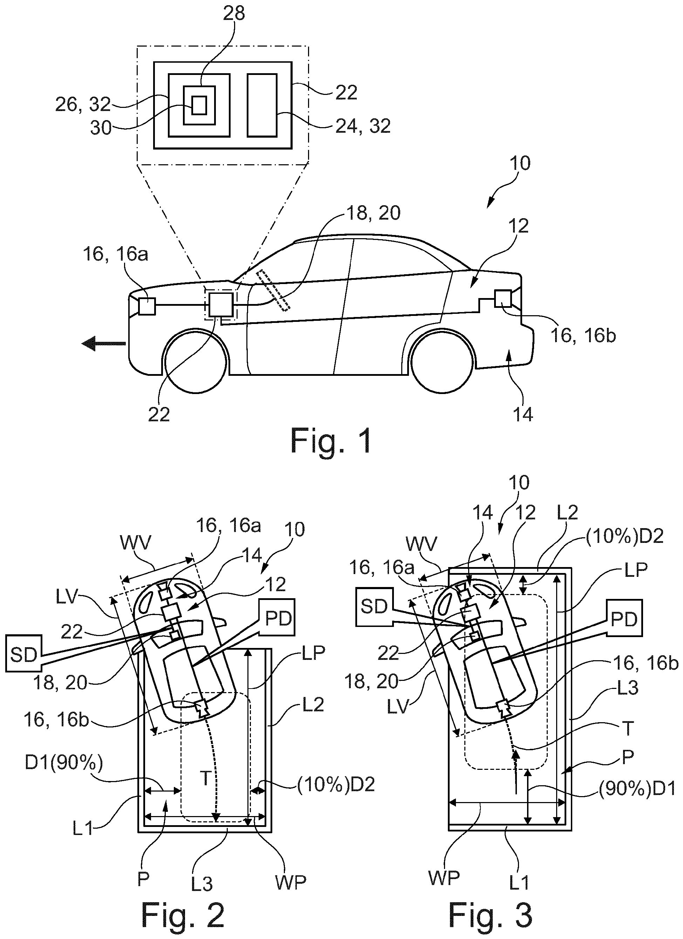

Figure 1 shows a vehicle 10 having a parking assistance system 12.

The parking assistance system 12 comprises a detector unit 14 being configured to generate parking space data PD being indicative of a first marking line L1, a second marking line L2, and a third marking line L3 (see examples in Figures 2 and 3). The first marking line L1, the second marking line L2, and the third marking line L3 limit a parking space P as will be explained in detail further below.

In the example of Figure 1, the detector unit 14 comprises a camera system 16. In the Figure, the camera system 16 is represented by a front camera 16a and a rear camera 16b. It is understood that the camera system 16 may comprise more than two cameras. The camera system 16 may alternatively be referred to as an imaging system.

Moreover, the parking assistance system 12 comprises a user interface 18 being configured to generate user setting data SD based on a user input.

In the example shown in the Figures, the user interface 18 comprises a display unit 20 having a touchscreen. It is understood that this type of the user interface 18 is purely illustrative. In other examples, the user interface 18 may comprise a turning knob, a slider or any other means suitable for receiving a user input for generating user setting data SD.

Furthermore, the parking assistance system 12 comprises a data processing apparatus 22.

The user interface 18 is communicatively connected to the data processing apparatus 22.

Additionally, the detector unit 14 is communicatively connected to the data processing apparatus 22. This means that in the example shown in the Figures, both the front camera 16a and the rear camera 16b are communicatively connected to the data processing apparatus 22.

The data processing apparatus 22 comprises a data processing unit 24 and a data storage unit 26.

The data storage unit 26 comprises a computer-readable storage medium 28.

On the computer-readable storage medium 28, there is provided a computer program 30.

The computer program 30, and, thus, the computer-readable storage medium 28 comprise instructions which, when the computer program 30 is executed by the data processing unit 24 or, more generally, a computer, cause the computer or the data processing unit 24 to carry out a method for operating the parking assistance system 12 of the vehicle 10.

Thus, the data processing unit 24 and the data storage unit 26 form means 32 for carrying out the method for operating the parking assistance system 12 of the vehicle 10.

In the following, the method will be explained in connection with the parking situation of Figure 2. This parking situation relates to so-called cross parking.

In the situation of Figure 2, a parking space P is provided which is laterally delimited by a first marking line L1 and a second marking line L2. In the representation of Figure 2, the first marking line L1 delimits the parking space P on a left side and the second marking line

L2 delimits the parking space P on a right side.

The back of the parking space P which is shown at a lower side of Figure 2 is delimited by a third marking line L3. Instead of the third marking line L3 the parking space P may as well be delimited by a curb.

A user of the vehicle 10 wishes to position the vehicle 10 on the parking space P, i.e. a user of the vehicle 10 wishes to park the vehicle 10 on the parking space P.

To this end, the parking assistance system 12 is used and operated in accordance with a method for operating the parking assistance system 12.

In the present context, the parking assistance system 12 is communicatively connected to an autonomous driving unit (not represented) such that the parking assistance system 12 is able to cause the vehicle 10 to move in or on the parking space P using an autonomous driving mode.

In a first step S1 of the method, parking space data PD is received.

The parking space data PD is generated by the camera system 16. This means that the parking space data PD comprises image data.

Moreover, the parking space data PD is indicative of the first marking line L 1, the second marking line L2 and the third marking line L3 or the curb.

In the present example this means that the image data comprises a representation of the first marking line L1, the second marking line L2 and third marking line L3 or the curb.

Using the data processing apparatus 22, the representation of the first marking line L1, the second marking line L2 and the third marking line L3 or the curb is detected within the image data.

In a second step S2, a parking possibility check is performed. This means that it is evaluated whether the vehicle 10 can be parked on the parking space P.

To this end, a width WP of the parking space P is calculated based on the detected first marking line L1 and the second marking line L2, i.e. a distance between the first marking line L1 and the second marking line L2 is calculated.

Moreover, this width WP is compared to a width WV of the vehicle 10 which is indicated by a vehicle width value which is provided on the data storage unit 26.

The method is continued if the width WV of the vehicle 10 is inferior to the width WP of the parking space P. Otherwise, i.e. if the width WV of the vehicle 10 equals the width WP of the parking space P or if the width WV of the vehicle 10 exceeds the width WP of the parking space P, the method is abandoned.

In the present example, the width WV of the vehicle 10 is inferior to the width wP of the parking space P.

Thereafter, in a third step S3, user setting data SD are received.

The user setting data SD are indicative of a distribution of a difference between a dimension of the parking space P, in the present example the width WP of the parking space P, and a dimension of the vehicle 10, in the present example the width WV of the vehicle 10.

In other words, the user setting data SD indicate how a lateral margin shall be distributed on the two lateral sides of the vehicle 10.

The user setting data SD are provided by the user interface 18.

In the present example, the display unit 20 shows a graphical representation of the parking space P and a graphical representation of the vehicle 10. The graphical representation of the vehicle 10 and the parking space P may be real-world images or icons. Since the display unit 20 comprises a touchscreen, the user may arrange the representation of the vehicle 10 on the representation of the parking space P as desired, e.g. by a drag-and-drop gesture, thereby indicating a distribution of the difference between the width WP of the parking space P and the width WV of the vehicle 10 along a width direction.

In another example, only a portion of the difference between the width WP of the parking space P and the width WV of the vehicle 10 which shall be provided on the driver side is input by the user. The portion of the difference between the width WP of the parking space P and the width WV of the vehicle 10 which shall be provided on the co-driver side is determined by calculating the remaining portion of the difference between the width WP of the parking space P and the width WV of the vehicle 10.

Thus, in both alternatives, the user setting is indicative of a first portion of the difference, the first portion being associated with a distance D 1 between the first marking line L1 and the vehicle 10. Moreover, the user setting is indicative of a second portion of the difference, the second portion being associated with a distance D2 between the second marking line L2 and the vehicle 10.

In the present example, the first portion is 90% and the second portion is 10%. This means that 90% of the difference between the width WP of the parking space P and the width WV of the vehicle 10 shall be provided on the left side of the vehicle 10 in Figure 2 and 10% of this difference shall be provided on the right side of the vehicle 10 in Figure 2.

Subsequently, in a fourth step S4, a check is performed in order to determine whether the received user setting fulfils a predefined requirement. This is done in order to keep a safety margin on both lateral sides of the parking space P. In the present example, the safety margin is 10% on both sides. This means that in a case in which the user input relates to a portion of less than 10% of the difference between the width WP of the parking space P and the width WV of the vehicle 10 for one lateral side of the vehicle 10, the method is interrupted or abandoned. At the same time, a warning may be issued.

Since in the present example, the user input relates to a distribution of 90% on the left side of the vehicle 10 in Figure 2 and 10% on the right side of the vehicles 10 in Figure 2, the method is continued.

Thereafter, in a fifth step S5, a parking trajectory T is determined based on the user setting.

This means that a parking trajectory T is determined along which the vehicle 10 may move in order to be positioned on the parking space P. The trajectory T is represented in dashed lines in Figure 2. Additionally, a silhouette of the vehicle 10 is indicated by dashed lines. This silhouette indicates a final parking position of the vehicle 10, i.e. a position the vehicle 10 reaches after having moved along the parking trajectory T.

Using the parking trajectory T, the vehicle 10 may be moved onto the parking space P using an autonomous driving mode of the vehicle 10.

Figure 3 shows another parking situation. In the following, only the differences with respect to the previous examples will be explained.

Also in the example of Figure 3, the parking space P is delimited by a first marking line L1, a second marking line L2 and the third marking line L3.

However, the parking situation of Figure 3 relates to so-called curb-side parking. This means that the first marking line L1 and the second marking line L2 delimit the parking space P in a length direction. The third marking line L3 delimits the parking space in a width direction. Instead of the third marking line L3, the parking space P may be delimited by a curb.

Based on this setting, the method for operating a parking assistance system 12 may be executed as has been explained in connection with Figure 2.

The only difference is that the user setting relates to a distribution of the difference between a length LP of the parking space P and a length LV of the vehicle 10. The length LP of the parking space P is defined by a distance between the first marking line L1 and the second marking line L2. A length LV of the vehicle 10 is provided by the data storage unit 26.

If, in analogy to the example of Figure 2, the user input relates to a distribution of 10% of the difference between the length LP of the parking space P and the length LV of the vehicle 10 which shall be arranged in front of the vehicle 10 and, thus, 90% of the difference between the length LP of the parking space P and the length LV of the vehicle 10 which shall be arranged in the rear of the vehicle 10, a user of the vehicle 10 may access a trunk with great comfort.

It is noted that the distribution of 90%-10% in the examples of Figures 2 and 3 are purely illustrative.

In alternative examples, the distribution may as well relate to any one of 80%-20%, 70%-30%, 60%-40%, 50%-50%, 40%-60%, 30%-70%, 20%-80%, 10%-90% and any other distribution therebetween.

Thus, in all of the above examples, user setting data SD being indicative of a distribution of a difference between a dimension, e.g. width WP or length LP, of the parking space P defined by the first marking line L1 and the second marking line L2 and a dimension, e.g. width WV or length LV, of the vehicle 10 is used for operating a parking assistance system 12 of a vehicle 10.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: parking assistance system
- 14: detector unit
- 16: camera system
- 16a: front camera
- 16b: rear camera
- 18: user interface
- 20: display unit
- 22: data processing apparatus
- 24: data processing unit
- 26: data storage unit
- 28: computer-readable storage medium
- 30: computer program
- 32: means for carrying out a method for operating a parking assistance system of a vehicle

- D1: distance between first marking line and vehicle
- D2: distance between second marking line and vehicle
- L1: first marking line
- L2: second marking line
- L3: third marking line
- LP: length of the parking space
- LV: length of the vehicle
- P: parking space
- PD: parking space data
- S1: first step
- S2: second step
- S3: third step
- S4: fourth step
- S5: fifth step
- SD: user setting data
- T: parking trajectory
- WP: width of the parking space
- WV: width of the vehicle

## Claims

1. A method for operating a parking assistance system (12) of a vehicle (10), the method comprising
- receiving parking space data (PD) being indicative of a first marking line (L1) and a second marking line (L2), the first marking line (L1) and the second marking line (L2) limiting a parking space (P) in at least one direction (S 1),
- receiving user setting data (SD) being indicative of a distribution of a difference between a dimension of the parking space (P) defined by the first marking line (L1) and the second marking line (L2) and a dimension of the vehicle (10) (S3),
- determining a parking trajectory (T) based on the received user setting data (SD) (S5).

2. The method of claim 1, wherein the user setting data (SD) is indicative of a first portion of the difference, the first portion being associated with a distance between the first marking line (L1) and the vehicle (10) and/or wherein the user setting data (SD) is indicative of a second portion of the difference, the second portion being associated with a distance between the second marking line (L2) and the vehicle (10).

3. The method of claim 2, wherein the first portion or the second portion is 50 % or 55% to 95%.

4. The method of any one of the preceding claims, further comprising checking whether the received user setting data (SD) fulfils a predefined requirement and determining the parking trajectory (T) based on the received user setting data (SD) only if the received user setting data (SD) fulfils the predefined requirement (S4).

5. The method of any one of the preceding claims, wherein the at least one direction is a width direction of the parking space (P).

6. The method of any one of claims 1 to 4, wherein the at least one direction is a length direction of the parking space (P).

7. A data processing apparatus (22) comprising means (32) for carrying out the method of any one of the preceding claims.

8. A computer program (30) comprising instructions which, when the computer program (30) is executed by a computer, cause the computer to carry out the method of claims 1 to 6.

9. A computer-readable storage medium (28) comprising instructions which, when executed by a computer, cause the computer to carry out the method of claims 1 to 6.

10. A parking assistance system (12) for a vehicle (10), comprising
- a data processing apparatus (22) according to claim 7,
- a detector unit (14) being configured to generate parking space data (PD) being indicative of a first marking line (L1) and a second marking line (L2), the first marking line (L1) and the second marking line (L2) limiting a parking space (P) in at least one direction, wherein the detector unit (14) is communicatively connected to the data processing apparatus (22), and
- a user interface (18) being configured to generate user setting data (SD) based on a user input, wherein the user interface (18) is communicatively connected to the data processing apparatus (22).

11. The parking assistance system (12) of claim 10, wherein the detector unit (14) comprises an imaging unit.

12. A use of user setting data (SD) being indicative of a distribution of a difference between a dimension of a parking space (P) defined by a first marking line (L1) and the second marking line (L2) and a dimension of a vehicle (10) for operating a parking assistance system (12) of the vehicle (10).

## Amended claims

### Amended claims in accordance with Rule 137(2) EPC.

1. A method for operating a parking assistance system (12) of a vehicle (10), the method comprising
- receiving parking space data (PD) being indicative of a first marking line (L1) and a second marking line (L2), the first marking line (L1) and the second marking line (L2) limiting a parking space (P) in at least one direction (S1),
- receiving user setting data (SD) being indicative of a distribution of a difference between a dimension of the parking space (P) defined by the first marking line (L1) and the second marking line (L2) and a dimension of the vehicle (10) (S3),
- determining a parking trajectory (T) based on the received user setting data (SD) (S5),
- checking whether the received user setting data (SD) fulfils a predefined requirement and determining the parking trajectory (T) based on the received user setting data (SD) only if the received user setting data (SD) fulfils the predefined requirement (S4), wherein the predefined requirement relates to a safety margin.

2. The method of claim 1, wherein the user setting data (SD) is indicative of a first portion of the difference, the first portion being associated with a distance between the first marking line (L1) and the vehicle (10) and/or wherein the user setting data (SD) is indicative of a second portion of the difference, the second portion being associated with a distance between the second marking line (L2) and the vehicle (10).

3. The method of claim 2, wherein the first portion or the second portion is 50 % or 55% to 95%.

4. The method of any one of the preceding claims, wherein the at least one direction is a width direction of the parking space (P).

5. The method of any one of claims 1 to 3, wherein the at least one direction is a length direction of the parking space (P).

6. A data processing apparatus (22) comprising means (32) for carrying out the method for operating a parking assistance system (12) of a vehicle (10) of any one of the preceding claims.

7. A computer program (30) comprising instructions which, when the computer program (30) is executed by a computer, cause the computer to carry out the method for operating a parking assistance system (12) of a vehicle (10) of claims 1 to 5.

8. A computer-readable storage medium (28) comprising instructions which, when executed by a computer, cause the computer to carry out the method for operating a parking assistance system (12) of a vehicle (10) of claims 1 to 5.

9. A parking assistance system (12) for a vehicle (10), comprising
- a data processing apparatus (22) according to claim 6,
- a detector unit (14) being configured to generate parking space data (PD) being indicative of a first marking line (L1) and a second marking line (L2), the first marking line (L1) and the second marking line (L2) limiting a parking space (P) in at least one direction, wherein the detector unit (14) is communicatively connected to the data processing apparatus (22), and
- a user interface (18) being configured to generate user setting data (SD) based on a user input, wherein the user interface (18) is communicatively connected to the data processing apparatus (22).

10. The parking assistance system (12) of claim 9, wherein the detector unit (14) comprises an imaging unit.
